# EUROPEAN PATENT APPLICATION

(11) **EP 2 164 227 A1**
(43) Date of publication of application: **17.03.2010**
(21) Application number: 08290861.7
(22) Date of filing: 15.09.2008
(51) Int. Cl.: H04L 29/06

(54) **Providing digital assets and a network therefor**

(71) Applicant: Alcatel Lucent, 75008 Paris (FR)
(72) Inventor: Kisel, Andrey, SL8 8DH Berkshire (GB); Robinson, Dave Cecil, Aldbourne SN8 2NP Wiltshire (GB)
(74) Representative: Sarup, David Alexander

(57) **Abstract**

A method is provided of providing digital assets in a network comprising a central controller connected to a plurality of servers. Each asset comprises at least one of video data and audio data. Each server serves a group of user terminals by storing a respective selected set of the assets and providing an asset from the selected set to a user terminal onrequest. The method comprises, for at least one of the servers, selecting which assets to store by the steps of: (a) for each of the group of user terminals served by the server receiving a recommendation as to a set of assets predicted as most likely to be desired by the individual user terminal, said recommendations being adapted to the individual users of said individual user terminals; (b) determining from the recommendations, a list of the most likely to be requested assets for the group of users; and (c) updating the assets stored in the server so that the listed most likely to be requested assets are stored in the server.

## Description

### Field of the Invention

The present invention relates to telecommunications, in particular to providing digital assets.

### Description of the Related Art

Early Internet Protocol television systems contained a limited set of multimedia assets, such as films/movies, and recordings of concerts and sports events. These assets are sometimes referred to as Content-on-Demand CoD, CoD assets, digital assets, content or titles. These early systems typically had relatively few subscribers, for example being based in hotels.

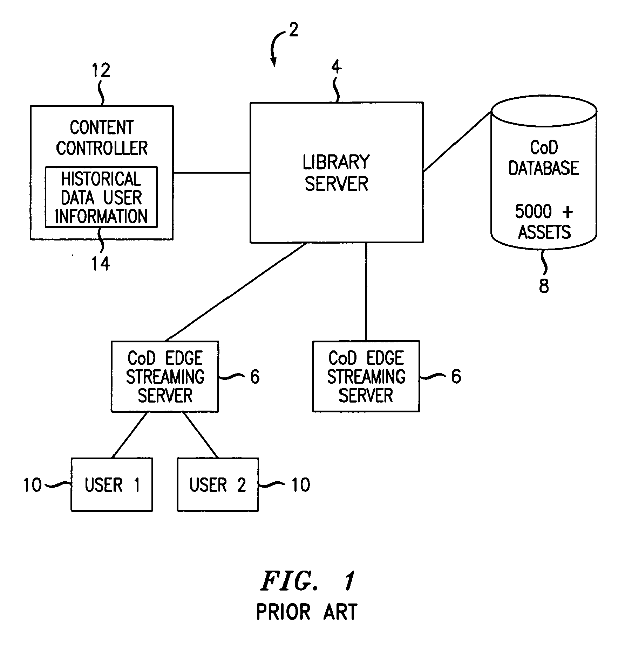

Since then, IPTV systems have expanded both in the number of assets involved and the number of subscribers. More recently, IPTV systems are known having more than five thousand assets and over one million subscribers. An example of such a system is shown in Figure 1.

As shown in Figure 1, a known IPTV Content-on-Demand CoD system 2 has a distributed architecture in that there is a central library server 4 connected to streaming servers 6 that are distributed close to subscribers 10. The streaming servers are located, for example, in telephone exchanges, These streaming servers 6 arc called CoD edge streaming servers.

The central library server 4 is connected to a database 8 of CoD assets. The database 8 has enough storage capacity to store all the assets. Typically there is a ratio of 10 to 1 in the amount of content storage available in the database 8 as compared to in a CoD edge streaming server 6. There arc, of course, many CoD edge streaming servers 6 and subscribers 10 but only a few of each are shown in Figure 1 for simplicity.

The IPTV system 2 includes a controller 12 which uses data of historical user information 14 to predict the likelihood of future viewings of assets. This user information 14 can include box office sales and records of viewings made in a given previous period.

In the system 2, personal video recorder (PVR) services are provided. In such services, the system 2 captures broadcast television content as CoD assets, and subscribers may access these assets. These services are called network personal video recorder (nPVR) services in that they are provided by the system 2, which is a network.

The most popular assets, be they nPVR assets or other CoD assets, are placed in the appropriate edge streaming servers 6 so as to reduce traffic between the library server 4 and subscribers 10. Essentially, popular assets are stored close to subscribers in the edge streaming servers 6.

In addition to closed or dedicated Content-on-Demand CoD systems such as Internet Protocol television, IPTV, there are open systems, namely so-called internet television systems.

Both for IPTV and internet television, various approaches to selecting assets for storage in the edge streaming servers have been developed. Conventionally, historical data is used to determine which assets to keep stored in edge streaming servers using Least Frequently Used (LFU) or Least Recently Used (LRU) approaches. These are known approaches whereby the least frequently requested asset, or least recently requested asset, at an edge streaming server, is removed, in order to make space for a more popular asset to be stored.

### Summary of the Invention

The reader is referred to the appended independent claims. Some preferred features are laid out in the dependent claims.

An example of the present invention is a method of providing digital assets in a network comprising a central controller connected to a plurality of servers. Each asset comprises at least one of video data and audio data. Each server serves a group of user terminals by storing a respective selected set of the assets and providing an asset from the selected set to a user terminal on request. The method comprises, for at least one of the servers, selecting which assets to store by the steps of: (a) for each of the group of user terminals served by the server receiving a recommendation as to a set of assets predicted as most likely to be desired by the individual user terminals, said recommendations being adapted to the individual users of said individual user terminals; (b) determining from the recommendations, a list of the most likely to be requested assets for the group of users; and (c) updating the assets stored in the server so that the most likely to be requested assets are stored in the server.

The list of most likely to he requested assets is used in updating which assets are stored in the server that serves the group of users. In some embodiment, in use, a list of suggested assets provided to a user can be limited to those available at the server to which the user terminal is connected. Users may often favour selecting from the list of suggested assets over searching for an asset from a large list.

In some embodiments, recommendation engine provide advance recommendations as to which assets individual users may be interested in without relying solely on historical data as to the frequency of past asset requests. The predicted recommendations may be dependent upon asset request patterns of other users having similar or related user profiles (age, education level, interests etc). The predicted recommendations may be dependent upon asset type ( e.g. an asset of a user's preferred genre or a related genre to that genre). The use of data from recommendation engines is advantageous in determining which assets to store in servers that are local to users but have limited storage.

### Brief Description of the Drawings

An embodiment of the present invention will now he described by way of example and with reference to the drawings, in which:
Figure 1 is a diagram illustrating a known IPTV system (PRIOR ART)
Figure 2 is a diagram illustrating an IPTV system according to an embodiment of the invention, and
Figure 3 is a diagram illustrating an example of operation of the system shown in Figure 2.

### Detailed Description

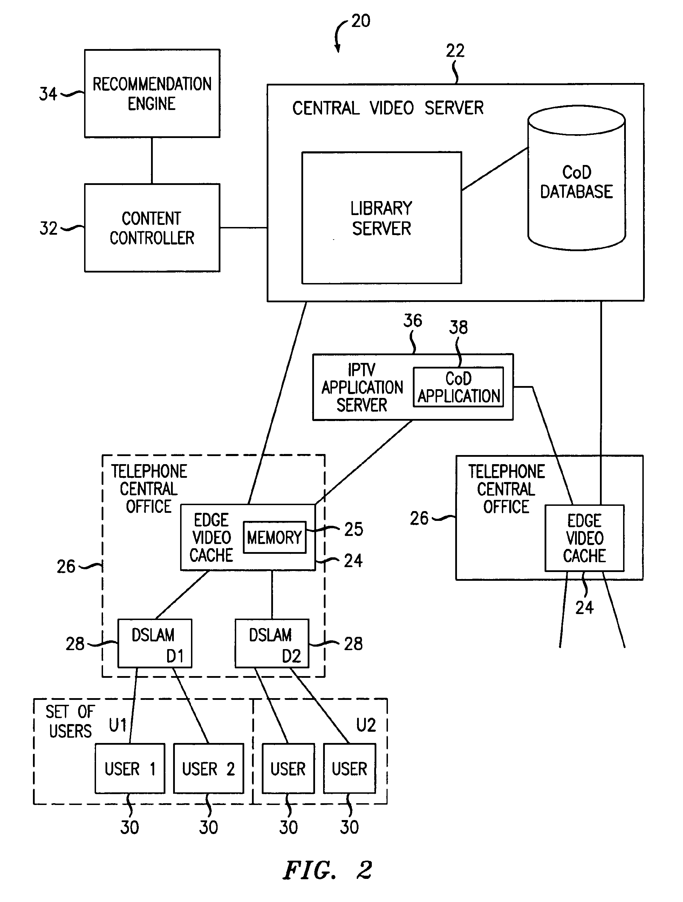

As shown in Figure 2, an IPTV system 20 consists of a central video sever 22, and several edge streaming servers namely edge video caches 24, each of which is located in a respective telephone central Office 26. Each cache 24 is connected to several Digital Subscriber Line Access Multipliers (DSLAMs) 28. In Figure 2, two DSLAMs 28, denoted D1 and D2 respectively, are shown for simplicity. Each DSLAM is connected to a respective set of IPTV user terminals 30. As shown in Figure 2, a first DSLAM D1 is connected to a first set U1 of IPTV user terminals 30 and a second DSLAM D2 is connected to a second set U2 of IPTV user terminals 30.

The central video server is connected to a content controller 32 which is connected to a recommendation engine 34. The system 20 also includes an IPTV application server 36 connected to the edge video caches 24. The edge video caches 24 each include a memory 25.

In the system 20, persona video recorder (PVR) services are provided, in addition to multimedia assets such as prerecorded films. In such services, the system 20 captures broadcast television content as CoD assets, and subscribers may access these assets. These services are called network personal video recorder (nPVR) services in that they are provided by the system 20, which is a network.

As explained in more detail below, some assets, be they nPVR assets or other CoD assets, are placed in the appropriate edge streaming caches 24 so as to reduce traffic between the library server 22 and user terminals 30. Assets that are determined as popular to the relevant users using the approach explained in more detail below, are stored close by, in the appropriate edge streaming cache 24.

### Recommendation Engine

The recommendation engine is a processor of known type such as sold by Think Analytics Inc. (www.thinkanalytics.com).

The recommendation engine is a processor operative to determine a list of CoD recommendations tailored to a specific user based on: input information of a user's declared profile, behaviour of users with similar profiles to a specific user (in a process known as collaborative filtering), content based filtering, a record of the user's consumption of other media (broadcast television, DVDs, book purchases, etc), and feedback information as to the CoD assets that the user has previously actually requested.

Collaborative filtering predicts level of interest to a specific user based on behaviour of users with similar interests, e.g. most users who watched movie assets A and B have also requested asset C so a user who has watched A and B but not C is likely to be recommended C.

Content based filtering is based on considering asset type, e.g. movie genre, for example based in asset meta-data, in formulating recommendations in view of discovered use preferences.

The user's declared profile is information of preferred film genres, preferred actors, hobbies (e.g. sports), and demographic information of the user (age, sex etc).

The input information is updated daily to provide an up to date list of CoD asset recommendations for each user each day.

The recommendation engine affects future asset request patterns by affecting which assets are stored in each edge streaming node 24 and hence suggested to users connected to the cache 24.

### Content Controller

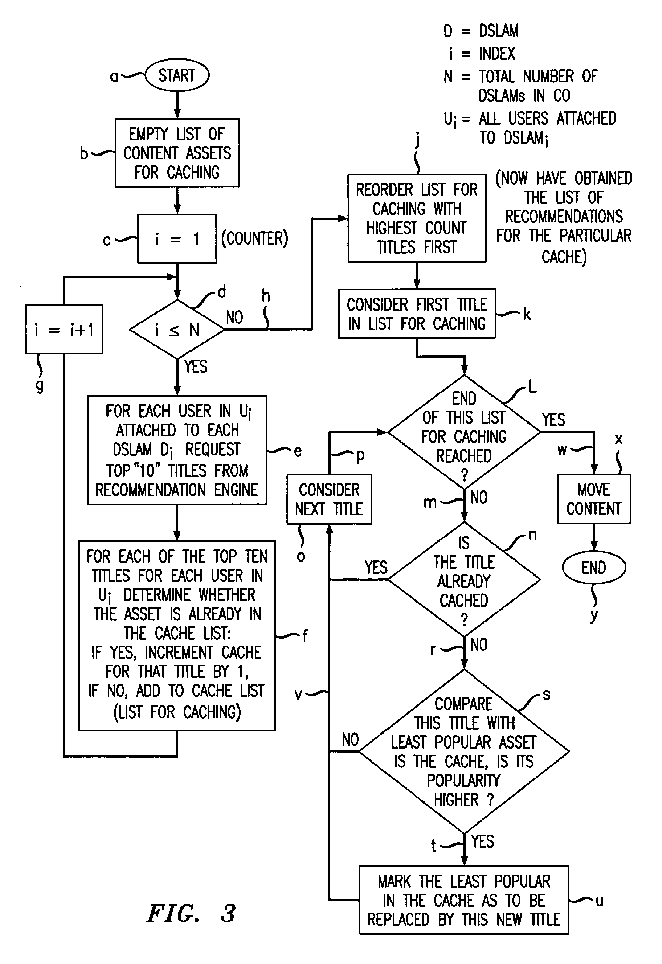

The content controller 32 determines and controls which assets to store in each edge video cache 24 dependent on the recommendations for individual users provided by the recommendation engine 34. The content controller includes a list of content assets for caching, and a counter, and operates as described below with reference to Figure 3.

### Content Controller Operation

As shown in Figure 3, the process starts (step a) with the list of titles of content assets for caching being cleared (step b). The counter which denotes an index *i* is set to 1 (step c), then a query is made (step d) as to whether the current value of *i* is is less than or equal to the total number N of DSLAMs 28 downstream of the edge video cache 24. These DSLAMs 28 are in the telephone central office 26.

If Yes, then for each user in the set Uᵢ of users which are attached to DSLAM Dᵢ, the "top 10" asset titles for the respective user are obtained (step e) from the recommendation engine 34.

Then the list of content assets for caching is generated (step f) by, for each of the "top10" asset titles for each user in set Uᵢ determining whether the asset is already on the list of content assets for caching. If yes, a count of the number of times that asset is in a Top10 list is incremented by one. If no, that asset is added to the list of content assets for caching.

After this, the index *i* is incremented (step g) by one, and a return is made (step h) to the query (step d) as to whether the current value of *i* is is less than or equal to the total number N of DSLAMs 28 downstream of the edge video cache 24. Then the process proceeds through repeated steps d,c,f and g until it is determined (Step h) that *i* is not less than or equal to N, in other words all users in all sets Ui where i=1,..N have been taken into account in formulating the list of content assets for caching.

The list of titles of content assets for caching is then reordered (step j) so that the assets are in descending order of counts (i.e. the title with the highest count is at the top of the list, and so on). This reordered list is the list of recommendations for caching in that particular edge video cache 24.

Having formulated this list, caching is undertaken as follows. The first title on the reorder list is selected (step k) and a query is made (step l) whether this title is the last title on the list of content assets for caching. The answer is No (step m), so a determination is then made (step n) as to whether the selected asset is already stored in the cache 24.

If Yes (i.e. the asset is already stored), then the next title in the list of content assets for caching is selected (step o) and a return made (step p) to the query (step *l*) whether this title is the last title on the list of content assets for caching. If No (i.e the asset is not already stored, step r), then a query is made (step s) as to whether that asset has a count that is higher than the lowest count of the assets currently stored in the cache.

If Yes (i.e. the title has a count higher than the least popular asset currently stored in the cache 24, step t) then that least popular asset in the cache is marked (step u) as to be replaced by this "new" title, and a return is made to step o, i.e. the next title in the list of content assets for caching is selected. If No (i.e the title has a count not higher than the least popular asset currently stored in the cache 28,), a return is made (step v) to step o, i.e. the next title in the list of content assets for caching is selected.

The process proceeds through further iterations until upon a query being made (step l) whether this title is the last title on the list of content assets for caching, the answer is yes (step w). As a next step, the replacement of assets marked in step u is put into effect (step x) and the process ends (step y).

This process is run periodically, for example daily, so us to take account of daily changes in recommendations provided by the recommendation engine in respect of individual users. Specifically, shortly after new assets, such as new blockbusters, are introduced into the system, recommendations for individual users arc generated by the recommendation engine that include the titles of those assets, and the content controller operation, that is shown in Figure 3, is run. Accordingly, the new blockbuster assets become promptly available at the edge video caches 24.

### Content offered to users

The IPTV application server 36 includes a CoD application 38 which, when a user terminal access the application, generates and supplies a list of ten suggested assets that arc tailored to that user terminal 30 using the user's profile but limited to those assets that are now available in the local edge video cache 24 of the user terminal 30.This list is sent to the user terminal via the appropriate edge video cache 24 and DSLAM 28.

The user terminal selects an asset to view or listen to, from that list, then, under the control of the IPTV application server 36, the edge video cache 24 supplies that asset to the user terminal 30.

Alternatively, if the user does not wish to select an asset from that list of ten, he may search for and request another asset stored in the local edge video cache 24 or the CoD database 8.

### Variants

In an alternative embodiment, it is possible to weight the counts depending on the type of user, so recommendations in respect of more frequent users have a greater influence. One example is to classify users into three levels: occasional, moderate, or heavy. For an occasional user, a count of 1 is added for each of his/her top ten recommendations. For a moderate user, a count of 2 is added for each of his/her top ten recommendations. For a heavy user, a count of 5 is added for each of his/her top ten recommendations.

In an alternative embodiment, an additional input to the recommendation engine is user's own recommendations as to levels of likely interest to other specified users (e.g. other family members) or groups of users (e.g. football fans). In an alternative embodiment, another input to the recommendation engine is professional recommendations/ratings made by film critics. Upon it being noticed that a well known film reviewer has just published some new film reviews, the recommendation engine is updated. If a significant change in popularity of an asset is noticed, then the content control process of the content controller is rerun to update the assets stored in the edge video caches.

In some other embodiment, in place of the DSLAMs, there are Intelligent SubscriberAccess Multiplier(ISAM) systems, or routers, or other network equipment.

Some embodiments are closed networks and some are open networks. Some closed networks are Internet Protocol Television (IPTV) networks and some open networks are internet television networks.

The present invention may be embodied in other specific forms without departing from its essential characteristics. The described embodiments are to he considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of providing digital assets in a network comprising a central controller connected to a plurality of servers, each asset comprising at least one of video data and audio data, each server serving a group of user terminals by storing a respective selected set of the assets and providing an asset from the selected set to a user terminal on request, the method comprising:
for at least one of the servers selecting which assets to store by the steps of:
(a) for each of the group of user terminals served by the server receiving a recommendation as to a set of assets predicted as most likely to be desired by the individual user terminal, said recommendations being adapted to the individual users of said individual user terminals;
(b) determining from the recommendations a list of the most likely to be requested assets for the group of users; and
(c) updating the assets stored in the server so that the listed most likely to be requested assets are stored in the server.

2. A method of providing digital assets according to claim 1, in which generation of the recommendations received in step (a) includes favouring assets selected by other user terminals having related user profiles.

3. A method of providing digital assets according to claim 1 or claim 2, in which generation of the recommendations received in step (a) includes favouring assets of an asset type preferred by the user or related to said asset type.

4. A method of providing digital assets according to any preceding claim, in which each server are connected to user terminals via a respective set of Digital Subscriber Line Access Multipliers (DSLAMs), and sets of users connected to each DSLAM are considered in turn to determine the list of most likely to be requested assets for the group of users.

5. A method of providing digital assets according to any preceding claim, in which the step (b) of determining from the recommendations a list of the most likely to be requested assets for the group of users includes incrementing a count associated with the asset on a list of assets upon the asset being recommended for a user, then reordering the list to be in a decreasing order of counts so as to provide the list of the most likely to be requested assets.

6. A method of providing digital assets according to claim 5, in which the step of (c) updating the assets stored in the server so that the listed most likely to be requested assets are stored in the server includes working down through said list of the most likely to be requested assets by checking whether the asset is already stored, and if not stored, checking whether that asset has a count higher than the asset with the lowest count that was stored previously.

7. A method of providing digital assets according to claim 5, in which counts are weighted such that a recommendation of an asset to a frequent user carries more weight than a recommendation of an asset to a less frequent user.

8. A method of providing digital assets according to any preceding claim, in which recommendations for an individual user are updated dependent on information from said user as to preferences of other users, or type of users, known to said individual user.

9. A method of providing digital assets according to any preceding claim, in which recommendations are updated dependent on information from an expert.

10. A method of providing digital assets according to any preceding claim, in which the method is repeated upon at least some recommendations for individual users being updated.

11. A method of providing digital assets according to any preceding claim, in which the user terminal is sent a list of suggestions of assets to request, the list of suggestions being limited to assets stored in the server.

12. A network for providing digital assets comprising a central controller connected to a plurality of servers, each asset comprising at least one of video data and audio data, each server comprising a memory and being configured to serve a group of user terminals by storing a respective selected set of the assets in the memory and providing an asset from the selected set to a user terminal onrequest, the network further comprising:
a content controller configured to, for at least one of the servers, select which assets to store;
the content controller being configured to:
(a) for each of the group of user terminals served by the server, receive a recommendation from a recommendation engine as to a set of assets predicted as most likely to be desired by the individual user terminal, said recommendations having been adapted to the individual users of said individual user terminals;
(b) determine from the recommendations, a list of the most likely to be requested assets for the group of users;
(c) control updating of the assets stored in the server so that the listed most likely to be requested assets are stored in the server.

## Amended claims

### Amended claims in accordance with Rule 137(2) EPC.

**1.** A method of providing digital assets in a network comprising a central controller (22) connected to a plurality of servers (24), each asset comprising at least one of video data and audio data, each server serving a group (U1,U2) of user terminals (30) by storing (25) a respective selected set of the assets and providing an asset from the selected set to a user terminal on request, the method comprising:
for at least one of the servers (24) selecting (34,32) which assets to store by the steps of:
(a) for each of the group of user terminals served by the server receiving (Fig.3:e) a recommendation as to a set of assets predicted as most likely to be desired by the individual user terminal, said recommendations being adapted to the individual users of said individual user terminals; **characterised by**
(b) determining (Fig.3:f,j) from the recommendations a list of the most likely to be requested assets for the group of user terminals; and
(c) updating (Fig.3:k-x) the assets stored in the server so that the listed most likely to be requested assets are stored in the server.

**2.** A method of providing digital assets according to claim 1, in which generation of the recommendations received in step (a) includes favouring assets selected by other user terminals having related user profiles.

**3.** A method of providing digital assets according to claim 1 or claim 2, in which generation of the recommendations received in step (a) includes favouring assets of an asset type preferred by the user or related to said asset type.

**4.** A method of providing digital assets according to any preceding claim , in which each server are connected to user terminals (30) via a respective set of Digital Subscriber Line Access Multipliers (DSLAMs) (28), and sets of user terminals connected to each DSLAM are considered in turn to determine the list of most likely to be requested assets for the group of user terminals.

**5.** A method of providing digital assets according to any preceding claim, in which the step (b) of determining from the recommendations a list of the most likely to be requested assets for the group of user terminals includes incrementing (Fig.3:f) a count associated with the asset on a list of assets upon the asset being recommended for a user terminal, then reordering (Fig.3:j) the list to be in a decreasing order of counts so as to provide the list of the most likely to be requested assets.

**6.** A method of providing digital assets according to claim 5, in which the step of (c) updating the assets stored in the server so that the listed most likely to be requested assets are stored in the server includes working down through said list of the most likely to be requested assets by checking (Fig.3:n) whether the asset is already stored, and if not stored, checking (Fig.3:s) whether that asset has a count higher than the asset with the lowest count that was stored previously.

**7.** A method of providing digital assets according to claim 5, in which counts are weighted such that a recommendation of an asset to a user terminal that is frequently used carries more weight than a recommendation of an asset to a less frequent user.

**8.** A method of providing digital assets according to any preceding claim, in which recommendations for an individual user terminal are updated dependent on information from said user terminal as to preferences of other users, or type of users, known to said individual user.

**9.** A method of providing digital assets according to any preceding claim, in which recommendations are updated dependent on information from an expert.

**10.** A method of providing digital assets according to any preceding claim, in which the method is repeated upon at least some recommendations for individual users being updated.

**11.** A method of providing digital assets according to any preceding claim, in which the user terminal is sent a list of suggestions of assets to request, the list of suggestions being limited to assets stored in the server.

**12.** A network for providing digital assets comprising a central controller (22) connected to a plurality of servers (24), each asset comprising at least one of video data and audio data, each server (24) comprising a memory (25) and being configured to serve a group (U1,U2)of user terminals (30) by storing a respective selected set of the assets in the memory and providing an asset from the selected set to a user terminal onrequest, the network further comprising:
a content controller (32) configured to, for at least one of the servers, select which assets to store;
the content controller being configured to:
(a) for each of the group of user terminals served by the server, receive a recommendation from a recommendation engine (34) as to a set of assets predicted as most likely to be desired by the individual user terminal, said recommendations having been adapted to the individual users of said individual user terminals;
**characterised in that**
the content controller (32) is also configured to:
(b) determine from the recommendations, a list of the most likely to be requested assets for the group of user terminals;
(c) control updating of the assets stored in the server (24) so that the listed most likely to be requested assets are stored in the server.
